# EUROPEAN PATENT SPECIFICATION

(11) **EP 2 183 512 B1**
(45) Date of publication and mention of the grant of the patent: **02.01.2013**
(21) Application number: 08775083.2
(22) Date of filing: 15.07.2008
(51) Int. Cl.: F16K 31/08

(54) **A MAGNETIC ASSEMBLY, A FLUID-FLOW ASSEMBLY AND AN INDICATOR**
MAGNETISCHE ANORDNUNG, FLUIDSTROMANORDNUNG UND ANZEIGE
ENSEMBLE MAGNÉTIQUE, ENSEMBLE D'ÉCOULEMENT DE FLUIDE ET INDICATEUR

(30) Priority: 17.08.2007 US 956631 P
(43) Date of publication of application: 12.05.2010
(73) Proprietor: The Technical University of Denmark, 2800 Lyngby (DK)
(72) Inventor: BAHL, Christian Robert Haffenden, DK-2630 Taastrup (DK); SMITH, Anders, DK-3460 Birkerod (DK); PRYDS, Nini, DK-2791 Dragor (DK)
(74) Representative: Freeman, Avi
(86) International application number: PCT/EP2008/059224
(87) International publication number: WO 2009/024411

(56) References cited:
- WO-A-2004/083798
- DE-A1- 19 702 140
- DE-A1- 19 814 985
- DE-B- 1 125 692
- DE-U- 7 045 973
- GB-A- 1 340 853
- JP-A- 61 056 949
- US-A- 4 303 196
- US-A1- 2004 150 504

## Description

The present invention relates to a fluid-flow assembly.

Magnetic assemblies in the form of valves are known. An example of such a valve is disclosed in US-A-2006/0042260. In this document, there is disclosed a valve comprising a permanent magnet and a valve member made of a ferromagnetic material. The valve is for controlling the flow of fluid to a component of a gas turbine engine. Since the valve includes a component made of a ferromagnetic material in thermal contact with the fluid, it is responsive to the temperature of the ferromagnetic material, such that as the temperature of the fluid flowing to the gas turbine varies, so does the attraction between the permanent magnet and the ferromagnetic component. Thus, the assembly is essentially a temperature dependent valve.

DE-A-1,125,692 discloses a throttle valve comprising a disc in a tube supported by a rod, the rod being parallel to the face of the disc and passing through its centre. Upon the disc, there is mounted a ring shaped body of magnetic material which may be activated by a magnet so as to cause the valve to open or close.

Improvements in such assemblies are desired.

According to a first aspect of the present invention, there is provided a fluid-flow assembly, comprising: a conduit for a flowing fluid; and, a magnetic assembly, the magnetic assembly comprising a magnet; and a ferromagnetic component having at least two regions of different Curie temperature, the magnet and the ferromagnetic component being movable with respect to each other in dependence on the temperature of the ferromagnetic component, the ferromagnetic component being movable within the conduit between a first position in which fluid can flow along the conduit and a second position in which the ferromagnetic component blocks fluid flow along the conduit; wherein the ferromagnetic component comprises an elongate structure having plural sections, each with a different Curie temperature; the magnetic assembly being arranged to provide automatic control of the flow of the fluid through the conduit in which the assembly is a valve wherein the ferromagnetic component and the magnet are movable with respect to each other to open and close the valve, at least one of the magnet and the ferromagnetic component being configurable such that the region of the ferromagnetic component that can engage with the magnet can be changed.

The component is ferromagnetic, the magnetic ordering temperature being the Curie temperature.

The invention provides a magnetic assembly that can be entirely passive. In other words the attraction and therefore the movement between the magnet and the ferromagnetic component can be dependent only on the temperature of the ferromagnetic component. Therefore in an example the assembly can be used as an automatic switch which triggers when the temperature of the environment (and therefore the ferromagnetic component) reaches a certain threshold thus causing the magnet and the ferromagnetic component to move relative to each other.

The assembly is a magnetic valve, wherein the magnet and the ferromagnetic component are movable with respect to each other to open and close the valve, at least one of the magnet and the ferromagnetic component being configurable such that the region of the ferromagnetic component that can engage with the magnet can be changed.

In an embodiment, the invention provides a magnetic valve including a ferromagnetic component having two regions of different Curie temperature. The ferromagnetic component is configurable such that the region of the ferromagnetic component that can engage with the magnet, can be varied. Accordingly, the temperature at which the valve is activated or deactivated may be changed. Thus, a single valve assembly may be used in applications in which the temperature of the flowing fluid is varied and in which it is desired to vary the activation temperature of the assembly.

The valve may be entirely passive such that no operator interaction is required to switch the valve. Indeed, the valve can operate entirely independently of operator intervention, solely dependent on the varying temperature of its environment e.g. the flowing fluid or the wider environment in which the valve is located.

According to the present invention, there is provided an assembly, comprising a conduit for a flowing fluid; and, a valve, the valve being arranged to provide temperature dependent control of the flow of the fluid through the conduit.

According to an example, there is provided an indicator comprising a magnet; and a ferromagnetic material component having at least two regions of different Curie temperature, the magnet and the ferromagnetic component being movable with respect to each other to indicate the state of the system.

Examples of embodiments of the present invention will now be described in detail with reference to the accompanying drawings, in which:
Figures 1A and 1B show a schematic representation of a magnetic valve in a first configuration both open and closed;
Figures 2A and 2B show the valve of Figures 1A and 1B in open and closed arrangements in a different configuration;
Figure 3 shows a schematic representation of a magnetic valve;
Figure 4 shows a schematic representation of an irrigation system including a magnetic valve; and
Figures 5A and 5B show a schematic representation of an example of a magnetic assembly.

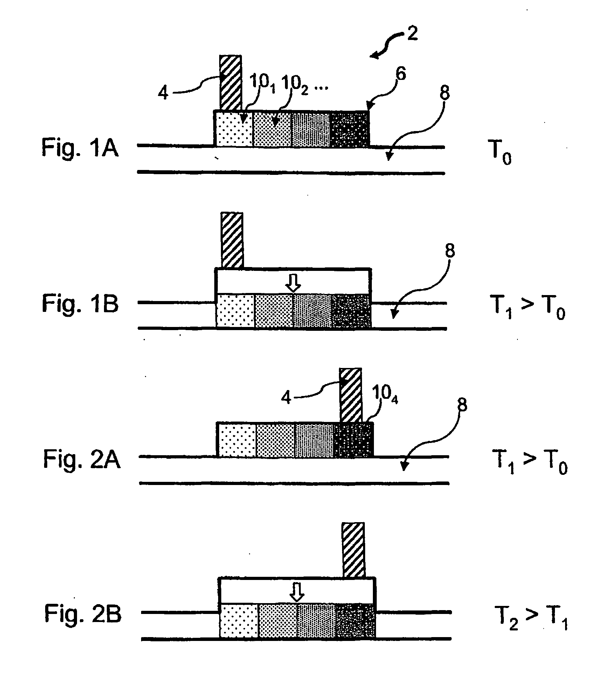

Figure 1A shows a schematic representation of a section through a magnetic assembly, which in this case is a valve 2. The valve 2 comprises a first part 4 comprising a magnet, such as a permanent magnet, and a second part 6 which is arranged to vary the size of an opening of the valve. A conduit 8 is shown for carrying a fluid. In this particular example, the second part 6 of the valve is a component made up of plural regions 10₁ to 10₄ each of which is selected to have a composition such as to have a magnetic ordering temperature at a desired value. Where the second part of the valve is ferromagnetic, the magnetic ordering temperature is the Curie temperature. It is preferred that the Curie temperature of each of the regions 10₁ to 10₄ is different and determined by the particular application.

Figure 1B shows the valve 2 of Figure 1A in a closed configuration wherein the second part 6 of the valve is blocking the flow of fluid within the conduit 8. Thus the second part 6 of the valve is movable between a first configuration (as shown in Figure 1A) in which the valve is open such that fluid can flow freely along the conduit 8, and a second configuration (as shown in Figure 1B) in which the valve is closed such that the second part 6 essentially blocks the flow of fluid within the conduit 8.

The fluid flowing in the conduit 8 in Figure 1A is at a temperature To. The fluid flowing within the conduit 8 shown in Figure 1B is at a temperature T₁, in which T₁ is greater than To and greater than the Curie temperature T_{c1} of the region 10₁ of the second part 6. The second part 6 is made of a ferromagnetic material such that as the temperature of the second part 6 varies, so does the attractive force between the permanent magnet 4 and the second part 6. Thus, the attractive force varies with temperature of the fluid flowing within the conduit 8.

The magnetic valve can be seen to consist, in this example, of a magnet and a graded active component made, preferably, of ceramic materials with a Curie temperature varying in the temperature interval of interest. The active component 6 is coupled thermally, and in this particular example directly, to the flowing medium, i.e. liquid or gas.

Ferromagnetic materials are strongly attracted to a magnetic field gradient. Magnetic materials which undergo a second-order phase transition from a high-temperature paramagnetic state to a low-temperature ferromagnetic state consequently have a marked difference in their interaction with a magnet.

At high temperatures they are weakly attracted to the magnet while at low temperatures they are strongly attracted to the magnet. The valve of Figure 2, relies on this principle. At low temperatures the component 6 is held in place by the magnet 4 (placed either outside or inside the flowing medium) thus allowing fluid to pass. As the temperature of the second part 6 increases due to an increase in ambient temperature or an increase in the temperature of the flowing fluid, the material becomes paramagnetic and detaches from the magnet 4, blocking the flow of fluid. When the temperature is lowered, the material is re-attracted to the magnet 4, and the flow opens again. Alternatively, the flow may be blocked when the material is attached to the magnet and open when the material is not. A double arrangement may be constructed where the flow is blocked when the temperature of the flowing fluid is below a certain level, and also blocked when the temperature of the fluid is above a different certain level, but open when the fluid temperature is in between the two levels.

By varying the composition of regions of the part 6, the Curie temperature of the regions of the part 6 can be made to be different. In other words, the Curie temperature of the second part as a whole is not uniform. Therefore, by moving the relative configuration of the magnet 4 and the second part 6, the region of the second part 6 that can engage with the magnet 4 changes, and so the temperature dependence of the valve 2 or the temperature at which it will switch also changes.

As explained above, the material used to form the second part 6 of the valve 2 may be ceramic. This provides the advantage that it is corrosion resistant and therefore the valve is stable over time. Furthermore, the valve can be easily manufactured using ceramic manufacturing techniques. Examples of a method for manufacturing the second part 6, with a graded Curie temperature, are described in our co-pending International patent application number PCT/EP2005/013654.

Preferably the first 4 and second 6 parts of the valve may be biased in either an open or closed position. This will serve to determine the threshold for the level of attraction for the valve to open or close. Some suitable means such as a spring may be used to bias the first and second parts together or apart. In addition the mass and magnetic strength of both the magnet and the ferromagnetic component must be balanced according to the force from the flow of fluid.

In use, the ferromagnetic material within the temperature adjustable valve is graded, i.e. has a Curie temperature varying from low to high. To set a working temperature of the valve 2, the first and second part of the valve 2 are moved relative to each other, such that the region of the second part 6 having the required Curie temperature is adjacent to the magnet 4. This will mean that the switch temperature of the valve 2 corresponds substantially to the Curie temperature of the region of the second part 6 that is in engageable proximity to the magnet 4.

In the examples shown in Figures 1A and 1B, the Curie temperature T_{c1} of the first region 10₁ of the second part 6 is To. Therefore, if the temperature of the fluid flowing within the conduit is below T₀, the assembly 6 will remain attracted to the permanent magnet 4 and therefore the conduit will be open. When the temperature of the fluid within conduit 8 rises, as shown in Figure 1B where the temperature is T_{1'} the region 10₁ of the second part 6, becomes paramagnetic and therefore the second part 6 falls or is forced by a biasing means to block the flow of fluid within the conduit 8.

In Figure 2A, the relative position of the second part 6 with respect to the magnet 4 has changed such that now, a different region 10₄ is in engageable proximity to the magnet 4. The Curie temperature T_{c4} of the region 10₄ is T₁. Therefore, for temperatures of fluid within conduit 8 less than T₁, the valve will remain open. As shown in Figure 2B, when the temperature of the fluid reaches T₂, in which T₂ is greater than T₁, the second part 6 becomes paramagnetic and therefore falls or is forced by a biasing means to block the flow of fluid within the conduit 8.

It is important that there is thermal contact, either direct or indirect, between the fluid flowing within the conduit 8 and the part of the valve 2 that is ferromagnetic.

The second part 6 of the valve 2 may be made of a ceramic material such as La_{1-x-y}CaₓSr_{y}MnO_{3-d} or an intermetallic compound such as LaFeₓSi_{y} or alloys of Gd with e.g. Tb, Ge or Si. This provides the advantage that the temperature range of sensitivity of the valve assembly may be within the range of every day usage. Typically, Curie temperatures between -200°C and 100°C may be achieved using materials such as those mentioned above although any suitable materials and corresponding ranges may be used.

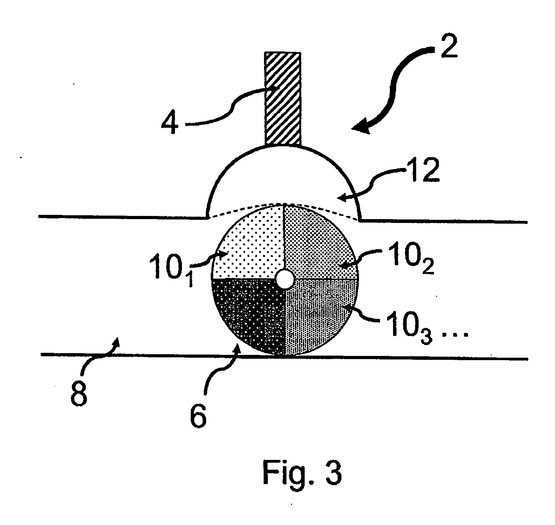

Figure 3 shows a schematic representation of a magnetic valve 2. Like the example shown in and described with reference to Figures 1 and 2, the valve has first and second parts 4 and 6, the second part 6 being subdivided into regions 10₁, 10₂... In this example the second part 6 is in the form of a rotary dial which can be rotated such that the desired region is in engageable proximity to the magnet 4 arranged outside the conduit 8. Some membrane may be required to provide a reconfigurable boundary between the recess 12 in which the second part 6 is received when the valve is open. The second part is mounted in such a way that a user can easily rotate it such that a desired region with a required Curie temperature is in engageable proximity to the magnet 4.

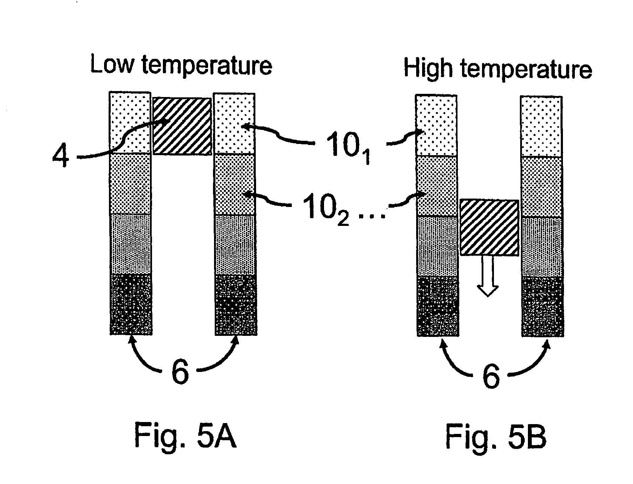

The valve described above has many possible applications. In one embodiment, the moving part of the valve may be connected to an electric circuit such that a switch could be opened or closed in dependence on the movement of the valve. The valve could be used as a trigger for an indicator to provide information as to the temperature that an associated cargo has been exposed to. An embodiment such as that disclosed shown in and described in detail below with reference to Figures 5A and 5B would be particularly suitable for such an application.

In an example, the valve is used within an irrigation system to control the flow of water for watering crops. When the ambient temperature reaches a desired high or low threshold, the valve can be configured to switch so as either to open or close the flow of water to the irrigation system. It will be appreciated that there are numerous possible applications of the valve.

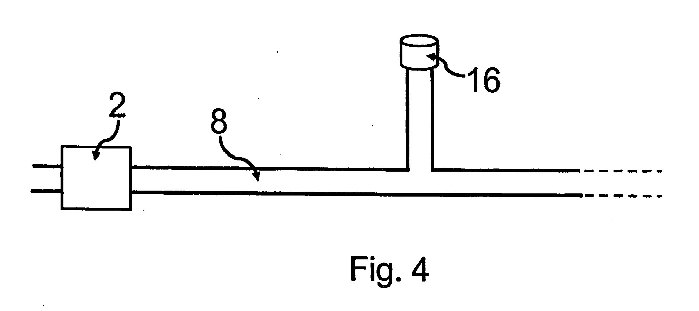

Figure 4 shows a schematic representation of part of a crop irrigation system. The system includes a sprinkler 16 connected to a conduit 8. A magnetic valve 2 such as valve shown in any of figures 1 to 3 is provided which provides automatic temperature dependent control of the operation of the irrigation system. In this example, the second part 6 is preferably mounted outside the conduit and the magnet 4 is mounted within the conduit such that the ambient temperature can be used easily to control automatically when the irrigation system is switched on or off. If it were the other way round, i.e. the second part within the conduit, then it would be the temperature of the water flowing within the conduit which would control the operation of the valve. Either configuration may be used.

It is particularly advantageous that the valve is entirely passive. Therefore, no operator interaction is required to switch the valve. Indeed, the valve can operate entirely independently of operator intervention, solely dependent on the varying temperature of its environment.

Figures 5A and 5B show an example of an assembly which functions as an indicator or a trigger. The assembly comprises a first part 4 comprising a magnet 4 and a second part 6 comprising a ferromagnetic material. The magnet 4 is arranged between two pieces 6 of active ferromagnetic material. As the temperature increases the ferromagnet gradually becomes paramagnetic further down and the magnet thus moves down to where the material is still ferromagnetic either due to gravity or to a biasing force. If the temperature decreases again the magnet will not move back up - thus creating a maximum temperature indicator.

In Figure 5A, the temperature is relatively low such that the second part is ferromagnetic relatively high up (in dependence on its composition). As the temperature increases the region of the second part 6 that is ferromagnetic effectively moves down (with respect to the configuration of the assembly shown in the Figure), causing corresponding downward movement of the magnet 4 (Figure 5B). In one example, the magnet could be connected to a component of a switch (not shown) such that when the temperature reaches a certain value and the magnet 4 a corresponding position, the switch is activated. Thus, the assembly functions as a trigger for the switch.

Embodiments of the present invention have been described with particular reference to the examples illustrated. However, it will be appreciated that variations and modifications may be made to the examples described within the scope of the present invention as defined by the appended claims.

## Claims

1. A fluid-flow assembly, comprising:
a conduit (8) for a flowing fluid; and,
a magnetic assembly, the magnetic assembly comprising a magnet (4); and
a ferromagnetic component (6) having at least two regions of different Curie temperature, the magnet (4) and the ferromagnetic component being movable with respect to each other in dependence on the temperature of the ferromagnetic component, the ferromagnetic component being movable within the conduit between a first position in which fluid can flow along the conduit and a second position in which the ferromagnetic component blocks fluid flow along the conduit; **characterised in that**
the ferromagnetic component (6) comprises an elongate structure having plural sections (10₁, 10₂, 10₃, 10₄), each with a different Curie temperature;
the magnetic assembly being arranged to provide automatic control of the flow of the fluid through the conduit (8)
in which the assembly is a valve wherein the ferromagnetic component (6) and the magnet (4) are movable with respect to each other to open and close the valve, at least one of the magnet and the ferromagnetic component being configurable such that the region of the ferromagnetic component that can engage with the magnet can be changed.

2. An assembly according to claim 1, **characterised by** being arrangeable in use such that the ferromagnetic component (6) is in thermal contact with the environment.

3. An assembly according to claim 1 or 2, **characterised in that** in use the valve is arrangeable to control the flow of a fluid within a conduit, the ferromagnetic component being arranged in use to be in thermal contact with a said fluid flowing within the conduit.

4. An assembly according to any of claims 1 to 3, **characterised in that** the ferromagnetic component comprises a rotatable unit such that as it is rotated, the region in engageable proximity to the magnet changes.

5. An assembly according to any of claims 1 to 4, **characterised in that** the ferromagnetic component is made of a ceramic material, an intermetallic compound or an alloy.

6. An assembly according to any of claims 1 to 5, **characterised in that** the magnet is for configuration on the outside of a fluid carrying conduit, and the ferromagnetic component is for arrangement within the conduit.

7. An assembly according to any of claims 1 to 6, **characterised in that** the magnet includes one or more of a permanent magnet or an electromagnet, an arrangement of permanent magnets or electromagnets, or a combination of permanent magnets and electromagnets.

8. An assembly according to any of claims 1 to 7, **characterised by** being arranged such that when the magnetic assembly switches state from open to closed or closed to open an external process is triggered.

## Patentansprüche

1. Fluidstrom-Anordnung, umfassend:
eine Rohrleitung (8) für ein strömendes Fluid sowie
eine Magnetanordnung, wobei die Magnetanordnung umfasst:
einen Magneten (4) und
ein ferromagnetisches Bauteil (6) mit zumindest zwei Bereichen unterschiedlicher Curie-Temperatur, wobei der Magnet (4) und das ferromagnetische Bauteil in Abhängigkeit von der Temperatur des ferromagnetischen Bauteils zueinander beweglich sind, wobei das ferromagnetische Bauteil innerhalb der Rohrleitung zwischen einer ersten Stellung, in der Fluid die Rohrleitung der Länge nach durchströmen kann, und einer zweiten Stellung, in der das ferromagnetische Bauteil das Strömen des Fluids entlang der Rohrleitung unterbindet, beweglich ist;
**dadurch gekennzeichnet, dass**
- das ferromagnetische Bauteil (6) eine langgestreckte Struktur mit einer Vielzahl von Abschnitten (10₁, 10₂, 10₃, 10₄) mit sich jeweils unterscheidender Curie-Temperatur umfasst;
- die Magnetanordnung so ausgestaltet ist, dass sie den Fluidstrom durch die Rohrleitung (8) automatisch steuert,
- wobei es sich bei der Anordnung um ein Ventil handelt, in dem das ferromagnetische Bauteil (6) und der Magnet (4) zueinander beweglich sind, um das Ventil zu schließen und zu öffnen, wobei zumindest entweder der Magnet oder das ferromagnetische Bauteil derart konfigurierbar ist, dass der Bereich des ferromagnetischen Bauteils, der in den Magneten eingreifen kann, veränderbar ist.

2. Anordnung nach Anspruch 1, die **dadurch gekennzeichnet ist, dass** sie im Gebrauch derart ausgestaltbar ist, dass das ferromagnetische Teil (6) in Wärmekontakt mit der Umgebung steht.

3. Anordnung nach Anspruch 1 oder 2, **dadurch gekennzeichnet, dass** das Ventil im Gebrauch anordenbar ist, um das Strömen eines Fluids innerhalb einer Rohrleitung zu steuern, wobei das ferromagnetische Bauteil im Gebrauch angeordnet ist, um in Wärmekontakt mit dem die Rohrleitung durchströmenden Fluid zu sein.

4. Anordnung nach einem der Ansprüche 1 bis 3, **dadurch gekennzeichnet, dass** das ferromagnetische Bauteil eine verschwenkbare Einheit umfasst, derart, dass sich der Bereich, der sich in Eingriffsnähe zu dem Magneten befindet, beim Verschwenken verändert.

5. Anordnung nach einem der Ansprüche 1 bis 4, **dadurch gekennzeichnet, dass** das ferromagnetische Bauteil aus einem Keramikmaterial, einer intermetallischen Verbindung oder einer Legierung besteht.

6. Anordnung nach einem der Ansprüche 1 bis 5, **dadurch gekennzeichnet, dass** der Magnet der Konfiguration außerhalb einer das Fluid befördernden Rohrleitung dient und das ferromagnetische Bauteil der Anordnung innerhalb der Rohrleitung dient.

7. Anordnung nach Anspruch 1 bis 6, **dadurch gekennzeichnet, dass** der Magnet einen oder mehrere Dauermagneten oder einen Elektromagneten, eine Anordnung von Dauermagneten oder Elektromagneten oder eine Kombination aus Dauermagneten und Elektromagneten einschließt.

8. Anordnung nach einem der Ansprüche 1 bis 7, die **dadurch gekennzeichnet ist, dass** beim Umschalten der Magnetanordnung vom offenen in den geschlossenen oder vom geschlossenen in den offenen Zustand ein externer Prozess ausgelöst wird.

## Revendications

1. Ensemble d'écoulement de fluide comprenant :
un conduit (8) pour un fluide en écoulement ; et,
un ensemble magnétique, l'ensemble magnétique comprenant
un aimant (4) ; et
un composant ferromagnétique (6) ayant au moins deux régions de température de Curie différente, l'aimant (4) et le composant ferromagnétique étant mobiles l'un par rapport à l'autre en fonction de la température du composant ferromagnétique, le composant ferromagnétique étant mobile à l'intérieur du conduit entre une première position dans laquelle un fluide peut s'écouler le long du conduit et une deuxième position dans laquelle le composant ferromagnétique bloque l'écoulement de fluide le long du conduit ; **caractérisé en ce que**
le composant ferromagnétique (6) comprend une structure allongée ayant plusieurs sections (10₁, 10₂, 10₃, 10₄), chacune avec une température de Curie différente ;
l'ensemble magnétique étant agencé pour fournir une commande automatique de l'écoulement du fluide à travers le conduit (8)
dans lequel l'ensemble est une vanne dans laquelle le composant ferromagnétique (6) et l'aimant (4) sont mobiles l'un par rapport à l'autre pour ouvrir ou fermer la vanne, au moins un de l'aimant et du composant ferromagnétique étant configurable de manière que la région du composant ferromagnétique qui peut s'engager avec l'aimant puisse être changée.

2. Ensemble selon la revendication 1, **caractérisé en ce qu'**il peut être agencé en service de manière que le composant ferromagnétique (6) soit en contact thermique avec l'environnement.

3. Ensemble selon la revendication 1 ou 2, **caractérisé en ce que**, en service, la vanne peut être agencée pour contrôler l'écoulement d'un fluide à l'intérieur d'un conduit, le composant ferromagnétique étant agencé en service pour être en contact thermique avec un dit fluide s'écoulant à l'intérieur du conduit.

4. Ensemble selon une quelconque des revendications 1 à 3, **caractérisé en ce que** le composant ferromagnétique comprend une unité tournante telle que, quand elle est en mouvement, la région à proximité d'engagement avec l'aimant change.

5. Ensemble selon une quelconque des revendications 1 à 4, **caractérisé en ce que** le composant ferromagnétique est constitué d'un matériau céramique, un composé intermétallique ou un alliage.

6. Ensemble selon une quelconque des revendications 1 à 5, **caractérisé en ce que** l'aimant est adapté pour une configuration sur l'extérieur d'un conduit de transport de fluide, et le composant ferromagnétique est adapté pour un agencement à l'intérieur du conduit.

7. Ensemble selon l'une quelconque des revendications 1 à 6, **caractérisé en ce que** l'aimant comprend un ou plusieurs parmi un aimant permanent ou un électroaimant, un agencement d'aimants permanents ou d'électroaimants, ou une combinaison d'aimants permanents ou d'électroaimants.

8. Ensemble selon l'une quelconque des revendications 1 à 7, **caractérisé en ce qu'**il est agencé de manière que, quand l'ensemble magnétique change d'état d'ouvert à fermé ou de fermé à ouvert, un processus externe soit déclenché.
